# EUROPÄISCHE PATENTSCHRIFT

(11) **EP 3 785 959 B1**
(45) Veröffentlichungstag und Bekanntmachung des Hinweises auf die Patenterteilung: **14.12.2022**
(21) Anmeldenummer: 20193353.8
(22) Anmeldetag: 28.08.2020
(51) Int. Cl.: B60J 10/16, B60J 10/265, B60J 10/76, B60J 10/79, B60J 10/78

(54) **RAHMENELEMENT FÜR EINE FENSTERSCHEIBE, FENSTERSCHEIBENANORDNUNG UND FAHRZEUG**
FRAME ELEMENT FOR A WINDOW PANE, WINDOW PANE ARRANGEMENT AND VEHICLE
ÉLÉMENT DE CADRE POUR UNE VITRE DE FENÊTRE, AGENCEMENT DE VITRE DE FENÊTRE ET VÉHICULE

(30) Priorität: 30.08.2019 DE 102019213161
(43) Veröffentlichungstag der Anmeldung: 03.03.2021
(73) Patentinhaber: VOLKSWAGEN AG, 38440 Wolfsburg (DE)
(72) Erfinder: Dinh, Van Khoa, 38448 Wolfsburg (DE); Ralph, Schneider, 38518 Gifhorn (DE); Michael, Schulz, 38442 Wolfsburg (DE)
(74) Vertreter: Clarenbach, Carl-Philipp

(56) Entgegenhaltungen:
- DE-A1-102005 013 581
- DE-A1-102016 119 691
- DE-T5-112018 000 016

## Beschreibung

### Rahmenelement für eine Fensterscheibe, Fensterscheibenanordnung und Fahrzeug

Die Erfindung betrifft ein Rahmenelement für eine Fensterscheibe, insbesondere eines Kraftfahrzeugs, mit einem Trägerelement und mit einem an dem Trägerelement angeordneten Dichtelement, das eine Aufnahme für einen Randbereich der Fensterscheibe aufweist. Weiterhin betrifft die Erfindung eine Fensterscheibenanordnung für ein Fahrzeug, insbesondere Kraftfahrzeug, mit zumindest einem Fensterrahmen, in welchem eine Fensterscheibe insbesondere unbeweglich angeordnet ist.

Außerdem betrifft die Erfindung ein Fahrzeug mit zumindest einer wie obenstehend beschrieben ausgebildeten Fensterscheibenanordnung.

Rahmenelemente, Fensterscheibenanordnungen und Fahrzeuge der oben genannten Art sind aus dem Stand der Technik bereits bekannt. So offenbart beispielsweise die Offenlegungsschrift EP 0 529 815 A1 eine Fensterscheibenanordnung, bei welcher eine Fensterscheibe an einem Träger unter Zwischenschaltung eines Dichtelements angeordnet ist. Das Dichtelement weist dabei eine randoffene Aufnahme für die Fensterscheibe auf, sodass die Fensterscheibe mit dem Träger fluchtend ausgerichtet ist, wodurch ein optisch vorteilhafter Eindruck entsteht.

Die Offenlegungsschrift DE 10 2016 119691 A1 offenbart eine Einrichtung zur randseitigen Dichtung einer Fensterscheibe mit einem Befestigungselement, einem Zierelement, sowie einem Dichtungsstrang, wobei das Befestigungselement einerseits sowie das Zierelement und/oder der Dichtungsstrang andererseits mittels Spritzgießen aneinander angeformt sind.

Die Offenlegungsschrift DE 10 2005 013581 A1 offenbart eine weitere Einrichtung zur randseitigen Dichtung einer Fensterscheibe ohne Zierelement.

Der Erfindung liegt die Aufgabe zugrunde, ein verbessertes Rahmenelement zu schaffen, das einerseits die Anforderungen eine gewünschte Dichtheit zu der Fensterscheibe erfüllt und andererseits einen vorteilhaften optischen Eindruck bietet.

Die der Erfindung zugrundeliegende Aufgabe wird durch ein Rahmenelement mit den Merkmalen des Anspruchs 1 gelöst. Dieses hat den Vorteil, dass das Dichtelement als solches versteckt wird, sodass die üblicherweise rau und matt anmutende Oberfläche des Dichtelements versteckt ist. Stattdessen wird eine Oberfläche mit einer geringeren Rauigkeit, die insbesondere einen Spiegel- oder Glanzeffekt gewährleistet, geboten, die Vorteile bei der Luftführung, sowie bei der Ableitung von Flüssigkeit sowie optische Vorteile bietet. Erfindungsgemäß wird dies dadurch erreicht, dass zumindest abschnittsweise an das Trägerelement und das Dichtelement ein Dekorelement aus Polymethylmethacrylat angeformt ist. Durch das Dekorelement werden Trägerelement und Dichtelement zumindest abschnittsweise verdeckt und die oben genannten Vorteile erreicht. Das Dekorelement erstreckt sich zumindest im Wesentlichen über die sichtbaren Oberflächen von Trägerelement und Dichtelement, sodass diese zumindest im Wesentlichen durch das Dekorelement überdeckt werden.

Bevorzugt ist das Dichtelement nur an von der Aufnahme des Dichtelements abgewandten Abschnitten mit dem Dekorelement versehen. Die Funktion des Dichtelements wird damit durch das Dekorelement in vorteilhafter Weise nicht beeinträchtigt.

Gemäß einer nicht erfindungsgemäßen Ausführungsform ist vorgesehen, dass das Dichtelement U-förmig ausgebildet ist, um den Randbereich der Fensterscheibe von drei Seiten zu umfassen. Der Randbereich der Fensterscheibe schließt die zwei einander gegenüberliegenden Seitenflächen der Fensterscheibe sowie die die Seitenflächen miteinander verbindende Stirnfläche der Fensterscheibe ein. Durch die U-förmige Ausbildung kontaktiert das Dichtelement somit bei optimalem Verbau der Fensterscheibe sowohl die Stirnseite als auch die Seitenflächen der Fensterscheibe an ihrem Randbereich. Hierdurch ist eine besonders vorteilhafte Dichtung geboten. Dadurch, dass das Dichtelement insbesondere elastisch verformbar ausgebildet ist, kann die Fensterscheibe mit ihrem Randbereich in die Aufnahme eingepresst werden, wodurch eine besonders vorteilhafte Dichtung realisiert ist.

Erfindungsgemäß ist das Dichtelement L-förmig ausgebildet, um an nur zwei aneinander angrenzenden und quer, insbesondere senkrecht zueinander ausgerichteten Seitenflächen der Fensterscheibe in dem Randbereich an der Fensterscheibe anzuliegen. Dadurch ist die Fensterscheibe nicht in der Aufnahme verpressbar, wie bei einem U-förmigen Dichtelement, dafür bietet die L-förmige Ausbildung den Vorteil, dass die Fensterscheibe bündig mit dem Dichtelement und/oder mit dem Dekorelement abschließen kann. Dadurch wird zum einen der optische Eindruck verbessert, und zum anderen eine verbesserte Luftführung mit einer Reduzierung von Luftwirbeln am Übergang zwischen Fensterscheibe und Dichtelement, insbesondere im Übergang zwischen Fensterscheibe und Trägerelement, erreicht.

Erfindungsgemäß weist das L-förmige Dichtelement einen der Stirnfläche der Fensterscheibe zugeordneten Abschnitt auf, dessen Breite der Breite der Fensterscheibe entspricht, und dass an dem freien Ende dieses Abschnitts das Dekorelement auf der von der Fensterscheibe abgewandten Seite des Abschnitts angeordnet ist. Damit ist das Dekorelement in der Fortführung der Fensterscheibe auf der abgewandten Seite des Abschnitts des Dichtelements angeordnet, sodass Fensterscheibe und Dekorelement insbesondere bündig zueinander liegen und eine nahezu durchgehende Oberfläche bilden. Dies führt zu den oben bereits genannten Vorteilen.

Weiterhin ist bevorzugt vorgesehen, dass das Dekorelement stoffschlüssig mit dem Dichtelement verbunden ist. Hierdurch wird eine besonders feste Verbindung von Dekorelement und Dichtelement erreicht. Insbesondere sind das Dekorelement und das Dichtelement als Strangprofile, insbesondere Strangpressprofile, gefertigt.

Optional sind das Dekorelement und das Dichtelement und optional das Trägerelement zusammen als Mehrkomponentenspritzbauteil ausgebildet, insbesondere in Form eines Strangprofils. Dadurch ist eine kostengünstige und zeitsparende Herstellung des Rahmenelements gewährleistet.

Vorzugsweise ist das Dekorelement schwarz gefärbt, sodass es der üblichen dunklen Färbung des Dichtelements entspricht und ein vorteilhafter optischer Eindruck entsteht.

Besonders bevorzugt weist das Dekorelement eine spiegelnde Oberfläche auf, die zu einem vorteilhaften optischen Eindruck in der Fortführung der Fensterscheibe führt, da sich durch die spiegelnde Oberfläche der Unterschied zwischen Rahmenelement beziehungsweise Dekorelement des Rahmenelements und Fensterscheibe weniger leicht ersichtlich ist.

Bevorzugt ist das Trägerelement aus Acrylnitril-Butadien-Styrol gefertigt, wodurch eine stabile und robuste Ausbildung des Rahmenelements gewährleistet ist.

Vorzugsweise ist außerdem das Dichtelement aus Ethylen-Propylen-Dien-Kautschuk gefertigt, optional mit einem thermoplastischen Polyolefine-Vulkanisat und/oder Styrol-Block Copolymer, wodurch das Dichtelement eine vorteilhafte und dauerhafte Elastizität zur Gewährleistung der Dichtheit erhält.

Weiterhin ist bevorzugt vorgesehen, dass auf der von dem Dichtelement abgewandten Seite des Trägers ein weiteres Dichtelement mit einer Aufnahme für eine insbesondere beweglich gelagerte Fensterscheibe angeordnet ist. Dadurch dient das Rahmenelement insbesondere als Trennelement zwischen zwei benachbarten Fensterscheiben und kann somit beispielsweise zwischen einer feststehenden und einer beweglich gelagerten Fensterscheibe in vorteilhafter Weise eingesetzt werden.

Die erfindungsgemäße Fensterscheibenanordnung mit den Merkmalen des Anspruchs 10 zeichnet sich durch die erfindungsgemäße Ausbildung des Rahmenelements aus. Es ergeben sich hierdurch die bereits genannten Vorteile.

Das erfindungsgemäße Fahrzeug mit den Merkmalen des Anspruchs 11 zeichnet sich durch die erfindungsgemäße Fensterscheibenanordnung aus. Auch hier ergeben sich die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: einen Abschnitt eines vorteilhaften Fahrzeugs mit einer vorteilhaften Fensterscheibenanordnung,
- Figur 2: eine Schnittdarstellung durch ein Rahmenelement der Fensterscheibenanordnung gemäß einem nicht erfindungsgemäßen ersten Ausführungsbeispiel und
- Figur 3: eine Schnittdarstellung durch das Rahmenelement der Fensterscheibenanordnung gemäß einem erfindungsgemäßen zweiten Ausführungsbeispiel.

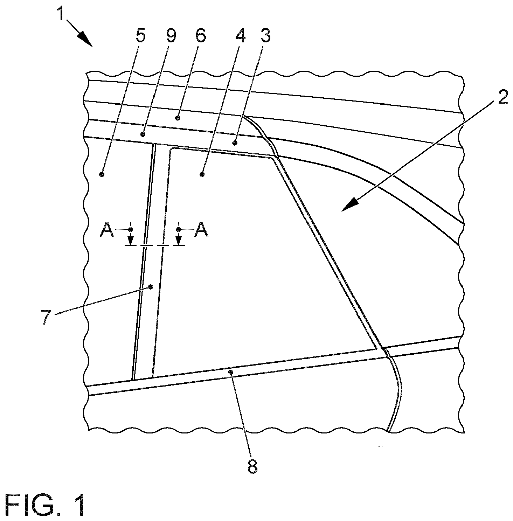

Figur 1 zeigt in einer vereinfachten Darstellung eine Draufsicht auf einen Abschnitt eines Kraftfahrzeugs 1 im Bereich der sogenannten C-Säule. Das Kraftfahrzeug 1 weist eine Fensterscheibenanordnung 2 auf, die eine in einem Rahmen 3 unbeweglich gehaltene Fensterscheibe 4 sowie eine in dem Rahmen 3 beweglich gehaltene Fensterscheibe 5 aufweist, die in dem Rahmen 3, insbesondere in einer Ebene hintereinander liegend angeordnet sind. Vorliegend sind die Fensterscheiben 4, 5 an einer Fahrzeugtür 6 des Kraftfahrzeugs 1 angeordnet. Zwischen den beiden Fensterscheiben 4, 5 ist ein Rahmenelement 7 des Rahmens 3 angeordnet, das sich von einem unteren Rahmenabschnitt 8 bis zu einem oberen Rahmenabschnitt 9 des Rahmens 3 im Wesentlichen vertikal erstreckt.

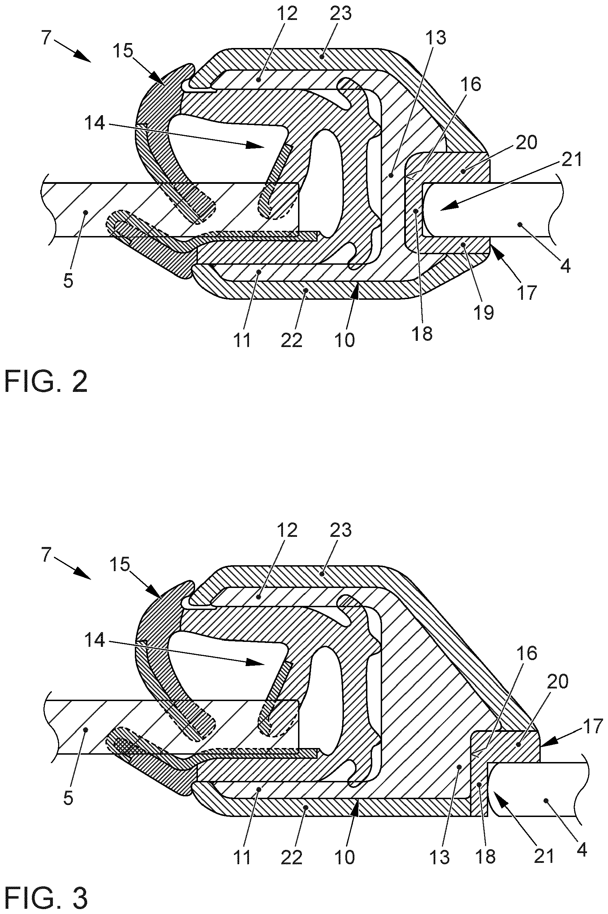

Figur 2 zeigt in einer Schnittdarstellung der Fensterscheibenanordnung 2 gemäß der Linie A-A aus Figur 1 ein nicht erfindungsgemäßes erstes Ausführungsbeispiel des Rahmenelements 7. Das Rahmenelement 7 weist ein im Querschnitt gesehen im Wesentlichen U-förmiges Trägerelement 10 auf. Das Trägerelement 10 weist durch seine U-förmige Ausbildung zwei einander gegenüberliegende Seitenwände 11 und 12 sowie einen die Seitenwände 11, 12 miteinander verbindenden Boden 13 auf. Durch die U-förmige Ausbildung ist in dem Trägerelement 10 eine zwischen den Seitenwänden 11, 12 liegende Aufnahme 14 ausgebildet, in welcher ein elastisch verformbares Dichtelement 15 angeordnet ist, das einen Randabschnitt der beweglichen Fensterscheibe 5 aufnimmt und an den einander gegenüberliegenden Seitenflächen der Fensterscheibe 5 dichtend anliegt. Das Dichtelement 15 ist in seinem entspannten/unbelasteten Zustand gezeigt, mit gestrichelten Abschnitten, die insbesondere durch die Fensterscheibe 5 elastisch verformt werden.

Auf der von der Aufnahme 14 abgewandten Seite weist der Boden 13 eine Vertiefung 16 auf, in welcher ein Dichtelement 17 bereichsweise angeordnet ist. Das Dichtelement 17 ist ebenfalls elastisch ausgebildet und weist im Querschnitt eine U-förmige Kontur auf. Dabei ist das Dichtelement 17 spiegelverkehrt zu dem Trägerelement 13 ausgebildet, sodass ein Boden-Abschnitt 18 des Dichtelements 17 an dem Boden 13 des Trägerelements 10 in der Vertiefung 16 anliegt, und zwei voneinander beabstandete und parallel zueinander ausgerichtete Seitenwandabschnitte 19, 20 zwischen sich eine Aufnahme 21 ausbilden, die zur Aufnahme der unbeweglichen Fensterscheibe 4 dient. Die Seitenwand-Abschnitte 19, 20 stehen dabei bereichsweise von dem Trägerelement 10 aus der Vertiefung 16 vor. Die Dichtelemente 17 und 15 sind derart ausgebildet, dass die Fensterscheiben 5, 4 fluchtend zueinander ausgerichtet sind.

Das Rahmenelement 7 weist weiterhin ein Dekorelement 22 auf, das sich über die Seitenwand 11 und den freistehenden Abschnitt des Seitenwandabschnitts 19 an der von der Aufnahme 21 abgewandten Seite des Dichtelements 17 erstreckt, sowie ein Dekorelement 23, das sich auf der gegenüberliegenden Seite des Trägerelements 10 entlang der Seitenwand 12 und des freien Abschnitts des Seitenwandabschnitts 20 des Dichtelements 17 auf der von der Aufnahme 21 abgewandten Seite des Dichtelements 17 erstreckt. Die beiden Dekorelemente 22, 23 können auch einstückig miteinander ausgebildet sein.

Vorzugsweise sind das Trägerelement 13 und das Dekorelement 22, 23, und optional auch das Dichtelement 20, stoffschlüssig miteinander verbunden, sodass ein Rahmenbauteil entsteht. Insbesondere sind das Trägerelement, die Dekorelemente 22, 23 und das Dichtelement 17 als Mehrkomponentenspritzbauteil, insbesondere als Strangpresselement, ausgebildet. Dabei unterscheiden sich die Materialien des Trägerelements 13, des Dichtelements 17 und der Dekorelemente 22, 23 bevorzugt voneinander.

Vorliegend ist das Dekorelement aus Polymethylmethacrylat (PMMA) gefertigt. Das Dichtelement 17 ist bevorzugt aus Ethylen-Propylen-Dien-Kautschuk (EPDM) gefertigt. Optional weist das Dichtelement ein thermoplastisches Poliolefine-Vulkanisat (TPV) und/oder ein Styrol-Block-Copolymer (TPS) auf. Das Trägerelement 10 ist bevorzugt aus Acrylnitril-Butadien-Styrol (ABS) gefertigt.

Die gewählten Materialien erlauben ein vorteilhaftes Verbinden der einzelnen Elemente des Rahmenelements 7 miteinander, insbesondere in der Art eines Mehrkomponentenbauteils, wie vorstehend bereits beschrieben. Die vorteilhafte Ausbildung der Dekorelemente 22, 23 ergibt insbesondere ein schwarz eingefärbtes Dekorelement mit einer spiegelnden Oberfläche an der Sichtseite beziehungsweise Außenseite. Dadurch fügt sich das jeweilige Dekorelement 22, 23 optimal in das Gefüge aus Fensterscheiben 4, 5 optisch ein.

Darüber hinaus erlaubt das vorteilhafte Dekorelemente 22, 23 eine verbesserte Strömungsführung, beispielsweise Fahrtwind, sowie ein verbessertes Abperlen von Flüssigkeit an dem Rahmenelement 7.

Figur 3 zeigt in einer weiteren Schnittdarstellung entlang der Linie A-A aus Figur 1 ein erfindungsgemäßes zweites Ausführungsbeispiel des Rahmenelements 7. Aus Figur 2 bereits bekannte Elemente sind mit den gleichen Bezugszeichen versehen, sodass insofern auf die obenstehende Beschreibung verwiesen wird. Im Folgenden soll im Wesentlichen nur auf die Unterschiede eingegangen werden.

Das Rahmenelement 7 gemäß dem zweiten Ausführungsbeispiel unterscheidet sich von dem vorhergehenden Rahmenelement insbesondere dadurch, dass das Dichtelement 17 nicht U-förmig, sondern L-förmig ausgebildet ist, der Seitenwandabschnitt 19 also fehlt. Dabei ist der Boden 18 derart lang ausgebildet, im Querschnitt gesehen, dass er der Breite der Fensterscheibe 4 entspricht, sodass die Fensterscheibe 4 mit ihrer Außenseite bündig mit dem Ende des Bodens 18 abschließt. Entsprechend der L-förmigen Ausbildung des Dichtelements 17 ist auch die Vertiefung 15 des Trägerelements 13 nunmehr L-förmig ausgebildet.

Das Dekorelement 22 endet nunmehr an der dem Trägerelement 13 zugewandten Rückseite des Bodens 18 und ist dabei ebenfalls bündig abschließend mit dem Bodenabschnitt 18 und der Fensterscheibe 4 ausgerichtet, sodass das Dekorelement 22 den Verlauf der Fensterscheibe 4 weiterführt. Hierdurch ergibt sich eine weiter verbesserte Strömungslinie für Fahrtwind, weil aufgrund der fluchtenden Ausrichtung von Fensterscheibe 4 und Dekorelement 22 Verwirbelungen am Übergang zwischen der Fensterscheibe 4, dem Dichtelement 17 und dem Dekorelement 22 vermieden werden.

### Bezugszeichenliste

- 1: Kraftfahrzeug
- 2: Fensterscheibenanordnung
- 3: Rahmen
- 4: Fensterscheibe
- 5: Fensterscheibe
- 6: Fahrzeugtür
- 7: Rahmenelement
- 8: Rahmenabschnitt
- 9: Rahmenabschnitt
- 10: Trägerelement
- 11: Seitenwand
- 12: Seitenwand
- 13: Boden
- 14: Aufnahme
- 15: Dichtelement
- 16: Vertiefung
- 17: Dichtelement
- 18: Boden-Abschnitt
- 19: Seitenwandabschnitt
- 20: Seitenwandabschnitt
- 21: Aufnahme
- 22: Dekorelement
- 23: Dekorelement

## Patentansprüche

1. Rahmenelement (7) für zumindest eine Fensterscheibe (4,5), insbesondere eines Kraftfahrzeugs (1), mit einem Trägerelement (10) und mit einem an dem Trägerelement (10) angeordneten Dichtelement (17), das eine Aufnahme (21) für einen Randbereich der Fensterscheibe (4) aufweist, wobei zumindest abschnittsweise an das Trägerelement (10) und das Dichtelement (17) ein Dekorelement (22,23) aus Polymethylmethacrylat angeformt ist, **dadurch gekennzeichnet, dass** das Dichtelement (17) L-förmig ausgebildet ist, um an nur zwei aneinander grenzenden und quer zueinander ausgerichteten Seitenflächen der Fensterscheibe (4) an der Fensterscheibe (4) anzuliegen, dass eine Tiefe der Aufnahme (21) des L-förmigen Dichtelements (17) einer Breite der Fensterscheibe (4) entspricht, zur bündigen Aufnahme der Fensterscheibe (4), und dass das L-förmige Dichtelement (17) einen einer Stirnfläche der Fensterscheibe (4) zugeordneten Boden-Abschnitt (18) aufweist, dessen Länge der Breite der Fensterscheibe (4) entspricht, und dass an dem freien Ende dieses Boden-Abschnitts (18) das Dekorelement (22) auf der von der Fensterscheibe (4) abgewandten Seite des Boden-Abschnitts (18) angeordnet ist.

2. Rahmenelement nach Anspruch 1, **dadurch gekennzeichnet, dass** das Dichtelement nur an von der Aufnahme (21) abgewandten Oberflächen mit dem Dekorelement (22,23) versehen ist.

3. Rahmenelement nach einem der vorhergehenden Ansprüche, **dadurch gekennzeichnet, dass** das Dekorelement (22,23) stoffschlüssig mit dem Dichtelement (17) verbunden ist.

4. Rahmenelement nach einem der vorhergehenden Ansprüche, **dadurch gekennzeichnet, dass** das Dekorelement (22,23) und das Dichtelement (17) und optional das Trägerelement (10) als Mehrkomponentenspritzbauteil ausgebildet sind.

5. Rahmenelement nach einem der vorhergehenden Ansprüche, **dadurch gekennzeichnet, dass** das Dekorelement (22,23) schwarz gefärbt ist.

6. Rahmenelement nach einem der vorhergehenden Ansprüche, **dadurch gekennzeichnet, dass** das Dekorelement (22,23) eine spiegelnde Oberfläche aufweist.

7. Rahmenelement nach einem der vorhergehenden Ansprüche, **dadurch gekennzeichnet, dass** das Trägerelement (10) aus Acrylnitril-Butadien-Styrol gefertigt ist.

8. Rahmenelement nach einem der vorhergehenden Ansprüche, **dadurch gekennzeichnet, dass** das Dichtelement (17) aus Ethylen-Propylen-Dien-Kautschuk, optional mit einem thermoplastischen Polyolefine-Vulkanisat und/oder Styrol-Block Copolymer gefertigt ist.

9. Rahmenelement nach einem der vorhergehenden Ansprüche, **dadurch gekennzeichnet, dass** auf der von dem Dichtelement (17) abgewandten Seite des Trägers (10) ein weiteres Dichtelement (15) mit einer weiteren Aufnahme (14) für eine beweglich gelagerte Fensterscheibe (5) angeordnet ist.

10. Fensterscheibenanordnung (2) für ein Fahrzeug, insbesondere Kraftfahrzeug, mit zumindest einem Rahmen (3), in welchem zumindest eine Fensterscheibe (4,5) insbesondere unbeweglich angeordnet ist, **dadurch gekennzeichnet, dass** der Rahmen (3) zumindest ein Rahmenelement (7) gemäß einem der Ansprüche 1 bis 9 aufweist.

11. Fahrzeug, insbesondere Kraftfahrzeug (1), mit zumindest einer Fensterscheibenanordnung (2) nach Anspruch 10.

## Claims

1. Frame element (7) for at least one window pane (4, 5), in particular of a motor vehicle (1), having a support element (10) and having a sealing element (17) which is arranged on the support element (10) and which has a receptacle (21) for an edge region of the window pane (4), wherein a decorative element (22, 23) of polymethyl methacrylate is integrally formed onto the support element (10) and the sealing element (17) at least in certain portions, **characterized in that** the sealing element (17) is L-shaped in form in order to bear on the window pane (4) at only two lateral surfaces of the window pane (4) which adjoin one another and are oriented transversely with respect to one another, **in that** a depth of the receptacle (21) of the L-shaped sealing element (17) corresponds to a width of the window pane (4), for flush reception of the window pane (4), and **in that** the L-shaped sealing element (17) has a bottom portion (18) which is assigned to an end face of the window pane (4) and the length of which corresponds to the width of the window pane (4), and **in that**, at the free end of this bottom portion (18), the decorative element (22) is arranged on that side of the bottom portion (18) facing away from the window pane (4).

2. Frame element according to Claim 1, **characterized in that** the sealing element is provided with the decorative element (22, 23) only at surfaces facing away from the receptacle (21).

3. Frame element according to either of the preceding claims, **characterized in that** the decorative element (22, 23) is connected to the sealing element (17) in an integrally bonded manner.

4. Frame element according to one of the preceding claims, **characterized in that** the decorative element (22, 23) and the sealing element (17) and optionally the support element (10) take the form of a multi-component injection-moulded part.

5. Frame element according to one of the preceding claims, **characterized in that** the decorative element (22, 23) is coloured black.

6. Frame element according to one of the preceding claims, **characterized in that** the decorative element (22, 23) has a reflective surface.

7. Frame element according to one of the preceding claims, **characterized in that** the support element (10) is produced from acrylonitrile-butadiene-styrene.

8. Frame element according to one of the preceding claims, **characterized in that** the sealing element (17) is produced from ethylene-propylene-diene rubber, optionally with a thermoplastic polyolefin vulcanizate and/or styrene block copolymer.

9. Frame element according to one of the preceding claims, **characterized in that** a further sealing element (15) having a further receptacle (14) for a movably mounted window pane (5) is arranged on that side of the support (10) facing away from the sealing element (17).

10. Window pane arrangement (2) for a vehicle, in particular motor vehicle, having at least one frame (3) in which at least one window pane (4, 5) is arranged, in particular immovably, **characterized in that** the frame (3) has at least one frame element (7) according to one of Claims 1 to 9.

11. Vehicle, in particular motor vehicle (1), having at least one window pane arrangement (2) according to Claim 10.

## Revendications

1. Élément de cadre (7) pour au moins une vitre de fenêtre (4, 5), notamment d'un véhicule automobile (1), avec un élément de support (10) et avec un élément d'étanchéité (17) agencé sur l'élément de support (10), qui présente un logement (21) pour une zone de bord de la vitre de fenêtre (4), un élément décoratif (22, 23) en polyméthacrylate de méthyle étant formé au moins par sections sur l'élément de support (10) et l'élément d'étanchéité (17), **caractérisé en ce que** l'élément d'étanchéité (17) est configuré en forme de L pour s'appliquer contre la vitre de fenêtre (4) sur seulement deux surfaces latérales de la vitre de fenêtre (4) adjacentes l'une à l'autre et orientées transversalement l'une par rapport à l'autre, **en ce qu'**une profondeur du logement (21) de l'élément d'étanchéité (17) en forme de L correspond à une largeur de la vitre de fenêtre (4), pour le logement en affleurement de la vitre de fenêtre (4), et **en ce que** l'élément d'étanchéité (17) en forme de L présente une section de fond (18) associée à une surface frontale de la vitre de fenêtre (4), dont la longueur correspond à la largeur de la vitre de fenêtre (4), et **en ce que** l'élément décoratif (22) est agencé à l'extrémité libre de cette section de fond (18) sur le côté de la section de fond (18) détourné de la vitre de fenêtre (4).

2. Élément de cadre selon la revendication 1, **caractérisé en ce que** l'élément d'étanchéité n'est pourvu de l'élément décoratif (22, 23) que sur des surfaces détournées du logement (21).

3. Élément de cadre selon l'une quelconque des revendications précédentes, **caractérisé en ce que** l'élément décoratif (22, 23) est relié à l'élément d'étanchéité (17) par liaison de matière.

4. Élément de cadre selon l'une quelconque des revendications précédentes, **caractérisé en ce que** l'élément décoratif (22, 23) et l'élément d'étanchéité (17) et éventuellement l'élément de support (10) sont configurés sous forme de pièce moulée par injection à plusieurs composants.

5. Élément de cadre selon l'une quelconque des revendications précédentes, **caractérisé en ce que** l'élément décoratif (22, 23) est de couleur noire.

6. Élément de cadre selon l'une quelconque des revendications précédentes, **caractérisé en ce que** l'élément décoratif (22, 23) présente une surface réfléchissante.

7. Élément de cadre selon l'une quelconque des revendications précédentes, **caractérisé en ce que** l'élément de support (10) est fabriqué en acrylonitrile-butadiène-styrène.

8. Élément de cadre selon l'une quelconque des revendications précédentes, **caractérisé en ce que** l'élément d'étanchéité (17) est fabriqué en caoutchouc éthylène-propylène-diène, éventuellement avec un vulcanisat de polyoléfine thermoplastique et/ou un copolymère séquencé de styrène.

9. Élément de cadre selon l'une quelconque des revendications précédentes, **caractérisé en ce que,** sur le côté du support (10) détourné de l'élément d'étanchéité (17), est agencé un autre élément d'étanchéité (15) avec un autre logement (14) pour une vitre de fenêtre (5) montée de manière mobile.

10. Agencement de vitres de fenêtre (2) pour un véhicule, notamment un véhicule automobile, avec au moins un cadre (3) dans lequel au moins une vitre de fenêtre (4, 5) est agencée, notamment de manière immobile, **caractérisé en ce que** le cadre (3) présente au moins un élément de cadre (7) selon l'une quelconque des revendications 1 à 9.

11. Véhicule, notamment véhicule automobile (1), avec au moins un agencement de vitres de fenêtre (2) selon la revendication 10.
